# EUROPÄISCHE PATENTSCHRIFT

(11) **EP 1 882 423 B1**
(45) Veröffentlichungstag und Bekanntmachung des Hinweises auf die Patenterteilung: **01.09.2010**
(21) Anmeldenummer: 07010580.4
(22) Anmeldetag: 15.10.2002
(51) Int. Cl.: A44B 18/00, B29C 43/22

(54) **Verfahre zur Herstellung eines Haftverschlussteiles**
Process for manufacturing a touch fastener part
Procédé pour produire un élément de fermeture à crochets et boucles

(30) Priorität: 15.12.2001 DE 10161744
(43) Veröffentlichungstag der Anmeldung: 30.01.2008
(62) Teilanmeldung aus: 02779162.3
(73) Patentinhaber: APLIX S.A., 75008 Paris (FR)
(72) Erfinder: Jahn, Werner, 08547 Jössnitz (DE); Seifert, Guntmar, 08525 Plauen (DE)
(74) Vertreter: Eidelsberg, Olivier Nathan

(56) Entgegenhaltungen:
- WO-A-94/29070
- DE-A1- 19 817 237
- DE-C- 19 828 856
- DE-C1- 19 524 076
- US-A- 6 132 660

## Beschreibung

Die Erfindung betrifft ein Verfahren zur Herstellung eines Haftverschlußteiles, welches ohne Verwendung von Sieben, aber unter Einsatz einer gummibeschichteten Walze in der Lage ist, eine Vielzahl von Verhakungsmitteln in der Form von ausgebildeten Stiften auf einer Formwalze zu erzeugen, wobei ein thermoplastischer Kunststoff durch einen Extruder über ein Breitschlitzwerkzeug der mit besonderen Merkmalen ausgestatteten Stiftwalze zugeführt wird und nachfolgend je nach Höhe der Produktionsgeschwindigkeit entweder mittels einer temperierten Anpreßwalze, welche bei der Produktion von Breitfolien bereits herkömmlich bekannt ist, in Verbindung mit einer Umlenkwalze durch Andrücken eine Kopfform der Stifte erfährt, oder alternativ berührungsfrei ein Plasmafeld durchläuft, in welchem die Kopfbildung der Stifte erfolgt. Das erfindungsgemäße Verfahren findet Anwendung bei der Herstellung von Haftverschlußteilen, welche vorzugsweise als Befestigungsmittel mit zugehörigem Gegenstück als herkömmlich bekannte Klettverschlüsse in vielfältigem Einsatz sind.

Bisher ist mit der DE 198 28 856 die Lösung eines Herstellungsverfahrens für Haftverschlußteils bekannt, welches dadurch gekennzeichnet ist, indem ein Formwerkzeug Anwendung findet, das an der von einem Druckwerkzeug abgekehrten Seite eines Siebes ein mit dessen Hohlräumen zusammenwirkendes zweites formgebendes Element aufweist, durch das der thermoplastische Werkstoff im Bereich der äußeren Enden der einzelnen Stempel geformt wird. Dabei wird als Druckwerkzeug eine Druckwalze eingesetzt und als Formwerkzeug eine die formgebenden Elemente tragende Formwalze verwendet, wobei beide Walzen für einen zwischen ihnen gebildeten Förderspalt angetrieben werden, durch den der Träger in Transportrichtung bewegt wird. Abgesehen davon, daß die Profilierung von Bandmaterial mit darauf befindlichen Profilen unter Einsatz von Prägewalzen bereits hinlänglich bekannter Stand der Technik sind, liegt das Wesen der Schrift DE 198 28 856 darin, daß ein walzenartig ausgebildetes metallenes Sieb aus zwei übereinander angeordneten Siebschichten mit unterschiedlich großen Öffnungen ausgeführt ist, wobei die innere Schicht größere Öffnungen aufweist als die äußere Schicht, die Öffnungen selbst sich jedoch deckungsgleich übereinander befinden. Durch das durchgehende Hohlräume aufweisende Sieb wird thermoplastischer Kunststoff gedrückt, welcher dort zumindest teilweise aushärtet, jedoch nach weiterer Drehung der Walze während des Produktionsprozesses von dieser noch abgezogen werden kann, wobei der stärkere Kopf der Stengel durch die enger ausgebildete äußere Öffnung der Siebwalze hindurchgezogen wird, ohne daß dabei seine Form beschädigt wird.

Solche eine Lösung ist auch mit der WO 94/290701 bekannt.

Dieser Lösung haftet jedoch der Nachteil an, daß sie wegen der aufwändigen Ausgestaltung des quasi doppelten metallischen Walzensiebes eine äußerst kostenungünstige Konstruktion darstellt und außerdem der Prozeß einer notwendigen Justierung der getrennt ausgeführten Walzensiebe einen kontraproduktiven zusätzlichen Arbeitsgang notwendig macht, da die Öffnungen beider Siebschichten zur Gewährleistung eines störungsfreien Produktionsablaufes genauestens übereinander angeordnet sein müssen. Der Kostenaufwand ist für diese gewählte Ausführung alleine schon wegen der teuren aufwändigen Bearbeitung des Einbringens der Sieböffnungen mittels vorzugsweise Bohren, aber auch Lasern, sehr nachteilig.

Ferner ist mit der DE 196 46 318 die weitere Lösung eines Verfahrens zur Herstellung eines Haftverschlußteiles aus thermoplastischem Kunststoff bekannt, welches dadurch gekennzeichnet ist, indem eine Formwalze ein Sieb bildet, dessen Hohlräume durch Bohren, Ätzen oder mittels eines Lasers hergestellt worden sind und daß die fertigen Verhakungsmittel des Befestigungselementes allein dadurch entstehen, daß der thermoplastische Kunststoff in den offenen Hohlräumen des Siebes der Formwalze zumindest teilweise erhärtet. Die Köpfe des Verhakungsmittels selbst werden bei dem Produktionsprozeß in einem Spalt zwischen dem Sieb der Formwalze sowie dem inneren Walzenkörper ausgebildet. Als Anwendungsmöglichkeit eines In dieser Art hergestellten Haftverschlußteiles wird insbesondere die Bildung eines Haftverschlusses für Babywindeln oder für Krankenhauskleidung offenbart. Für eine Verwendung in Haftverschlüssen derartiger Kleidungsstücke benötigt man eine relativ hohe Anzahl von Verhakungsmitteln, gegenüber alternativen Befestigungsmitteln, auf eine Flächeneinheit bezogen. Das führt bei diesem bereits bekannten Verfahren zu sehr hohen Herstellungskosten für das Formwerkzeug, welches der hohen Anzahl von Verhakungsmitteln entsprechend, ein Sieb mit einer entsprechend großen Anzahl von Hohlräumen pro cm² erforderlich macht Um zu gewährleisten, daß am äußeren Ende der in den Siebhohlräumen durch den eingedrückten Kunststoff gebildeten Stengel endseitige Verdickungen ausgebildet werden können, ist es bei dem bekannten Verfahren zudem notwendig, daß die Siebhohlräume an ihren Rändern, zumindest auf der vom Druckwerkzeug abgekehrten Seite, nach innen verlaufende Radien aufweisen.

Der vorgenannten Lösung haftet jedoch der Nachteil an, daß die hierfür notwendige Formgebung der sehr großen Anzahl von Hohlräumen des Siebes, was durch Bohren, Ätzen, Galvanisieren oder mittels Laserbearbeitung erfolgen kann, auch zu sehr hohen Herstellungskosten führt, welche sich dann nachfolgend ungünstig auf den Preis des Haftverschlußteiles selbst negativ auswirken.

Schließlich ist mit der DE 694 27 164 noch eine weitere Lösung eines Verfahrens zur Herstellung eines pilzförmigen Hakenbandes für einen mechanischen Verbinder mittels Extruders, verschiedenen beheizten beziehungsweise Druck ausübenden Walzensystemen sowie einer Vakuumeinheit bekannt, wobei das Hakenband als Produkt aus einer einstückigen Anordnung aus hochstehenden Stielen mit Köpfen besteht und dadurch gekennzeichnet ist, daß im Schritt des kontinuierlichen Durchführens des Bandes der Spalt durch den das Band zwischen zwei Walzen geführt wird, von denen eine Walze beheizt ist und eine zweite Gegenwalze einen Druck ausübt, ein Maß zwischen der Stützfläche der Druckwalze und der erwärmten Oberfläche der beheizten Walze aufweist, das kleiner als das vorbestimmte Anfangsdickenmaß des Bandes ist, um so die Vorsprünge gegen die erwärmte Oberfläche zusammenzudrücken, wobei die Geschwindigkeit, das Spaltmaß und die Wärmekapazität der beheizten Walze derart dimensioniert sind, daß eine Wärmeübertragung von der erwärmten Oberfläche in die zusammengedrückten Vorsprünge bewirkt wird, die ausreicht, Außenabschnitte der Vorsprünge zu allgemein kreisförmigen oder scheibenförmigen Hakenköpfen zu verformen.
Dieser Lösung haftet der Nachteil an, daß sie einerseits einen hohen produktionstechnischen Aufwand durch vorrichtungsgemäße teure, kostenaufwändige Anlagen mit massiver und gebohrter Walze sowie auch ein zusätzliches Vakuumsystem erfordert und andererseits ein Endprodukt erzeugt, welches sich nur durch eine relativ geringe Anzahl von kreisförmigen oder hakenförmigen Hakenköpfen auszeichnet, wodurch kein hinreichend guter Gebrauchswert bezüglich des Haftverschlusses erzielt wird.

Die Erfindung stellt sich daher die Aufgabe, ein technologisch effizientes sowie auch kostengünstiges Herstellungsverfahren zu schaffen, bei welchem mit geringem Aufwand die dafür notwendige Verfahrenseinrichtung herstellbar ist und letztlich die Produktion für ein mindestens gleichwertiges Endprodukt einfacher und billiger wie bei den bisher bekannten Verfahren durchgeführt werden kann. Die Aufgabe der Erfindung wird gelöst, durch die im kennzeichnenden Teil des Anspruchs 1 aufgezeigten technischen Merkmale.

Das Wesen der Erfindung besteht in der Anwendung eines Herstellungsverfahrens für ein Haftverschlußteil, welches aus thermoplastischem Kunststoff als Folienband extrudiert wird sowie über eine Breitschlitzdüse dem Spalt zwischen einer temperierten Glätt- und Druckwalze sowie einer temperierten gummibeschichteten Formwalze zugeführt wird. Dabei zeichnet sich diese gummibeschichtete Formwalze zur Durchführung des erfindungsgemäßen Verfahrens durch mehrere besondere konstruktive Merkmale aus. Der Grundkörper der temperierten Formwalze ist metallisch ausgestaltet und auf dieser Walze ist eine Gummischicht formschlüssig aufgebracht. Dabei ist die Gummischicht nach ihrer Aufbringung auf die Formwalze laserbehandelt. Durch den Prozeß des Lasern der Gummischicht werden Sacklöcher für die spätere Aufnahme der Stifte als Verhakungselemente in die Gummischicht durch entsprechende Formgebung äußerst ökonomisch eingebracht. Die Ausgestaltung der Stifte selbst erfolgt vorzugsweise in der Querschnittsform eines Dreieckes. Maßgeblich bei der Ausgestaltung der Gummischicht ist das Merkmal der Anordnung von Sacklöchern zur Aufnahme der Stifte. Auf solche Weise liegt die Gummischicht vollflächig auf dem Grundkörper der metallischen temperierten Formwalze auf, welche zur besseren Aufnahme sowie einem sicheren Sitz der Gummischicht zweckdienlich aufgerauht ist Durch die Anordnung der Sacklöcher ist die Gummischicht lediglich auf ihrer Oberfläche unterbrochen und bildet auf solche Weise auch kein Sieb zum Gegensatz des bisherigen Standes der Technik. Bei dieser Anwendung ist das Material Gummi sehr effektiv beziehungsweise kostengünstig und extrem leicht zu lasern. Es entstehen an den Rändern der Öffnungen für die Stifte auch keine hinderlichen und sich negativ auswirkenden Aufwölbungen oder Aufwerfungen. Ferner lassen sich pro cm² auch sehr viele Öffnungen äußerst sauber lasern, was zu einem erwünscht hohen Gebrauchswert des Endproduktes beiträgt. Ein weiterer Vorteil der Gummischicht besteht ferner in seiner relativen Elastizität gegenüber jedem vergleichbaren metallischem Material, was einen problemloseren Entformungsvorgang im Produktionsprozeß ermöglicht. Es besteht ferner die Möglichkeit der mehrmaligen Benutzung selbst einer gelaserten Gummischicht, indem diese überdreht und neu gelasert wird. Bereits gelaserte Gummischichten können außerdem problemlos beliebig nachgelasert werden, falls beispielsweise die Forderung nach längeren Stiften erhoben wird, bedingt durch einen anderen Einsatzzweck des Haftverschlusses. Gleichsam ist die Möglichkeit des schnellen Wechselns einer derart kostengünstigen Gummischicht gegeben, falls beispielsweise auch die Form des Querschnitts der Stifte in ihrer Geometrie, deren Länge, oder auch die Anzahl der Stifte, beziehungsweise Befestigungshaken pro Flächeneinheit für unterschiedliche Einsatzzwecke geändert werden sollen. Problemlos können ferner beispielsweise selbst 700 Löcher pro cm² in die Gummischicht eingebracht werden. Somit ist die Lochzahl pro Flächeneinheit in Ihrer Anzahl frei wählbar, doch ist ab einer bestimmten Größenordnung kein Sinn mehr für die Wirkungsweise eines guten Haftverschlusses gegeben. Wesentlich bei der erfindungsgemäßen Lösung ist allein der Umstand, daß es verfahrensgemäß keinerlei Einschränkungen durch ökonomische Zwänge mehr gibt.
Die Wahl einer temperierten Formwalze mit Gummibeschichtung wirkt auf dem einschlägigen Fachgebiet revolutionierend, da in keiner Beziehung mehr Grenzen gesetzt sind. Beginnend mit der Beschichtungsstärke des Gummis, bis zur Formgebung des Schaftes der Stifte sowie der Form des Kopfes der Stifte und natürlich der Anzahl pro Flächeneinheit ist eine freie Wählbarkeit ohne Gebundenheit bei der ansonsten aufwendigen Herstellung gegeben. So ist beispielsweise die Beschichtungsstärke der Gummischicht zweckdienlich von etwa 0,5 mm bis 3,0 mm in ihrer Stärke frei wählbar, was die günstigsten Größenordnungen anbelangt. Ferner ist bei der erfindungsgemäßen temperierten gummibeschichteten Formwalze eine optimale, dem Anwendungszweck angepasst sogar ideale Lochgeometrie möglich. Diese besteht in ihrer stufenlos, daß heißt gleichmäßig nach unten verlaufenden, leicht konischen Form des Sackloches für die Stifte. Außer dieser konischen Vorzugsvariante sind jedoch auch exakt zylindrisch verlaufende Sacklöcher anwendbar. Beginnend an der Oberfläche der Gummischicht mit einem leicht vergrößerten Loch, verläuft das gelaserte Loch nach unten sich leicht verjüngend, was im Produktionsprozeß den Entformungsvorgang günstig beeinflußt und hohe Bandgeschwindigkeiten ermöglicht beziehungsweise zuläßt.
Im Gegensatz zur DE 198 28 856 wird bei der vorgeschlagenen erfindungsgemäßen Lösung der Boden des Sackloches nachfolgend derart bearbeitet, indem durch Lasern dreidimensional jede gewünschte willkürliche geometrische Formgebung, bis hin zu einer weiteren Vertiefung des ursprünglich gelaserten Loches produziert werden kann. Auf solche Weise besteht neben den vorgenannten Möglichkeiten der freien dreidimensionalen Ausgestaltung außerdem noch die freie Wählbarkeit des Sacklochbodens für die Ausgestaltung des Stiftkopfes des späteren Verhakungselementes.
Die Gummischicht der temperierten Formwalze wird weiterhin einer gesonderten Oberflächenbehandlung mit einer PTFE-Teflonbeschichtung unterzogen, um das gleichmäßige Einpressen des Kunststoffes und auch das Entformen der Stifte technologisch günstig zu beeinflussen. Bei der erfindungsgemäßen Lösung ist es nicht erforderlich, daß die Sacklöcher für die Stiftherstellung durch eine Vakuumanlage entlüftet werden, weil die gewählte Geometrie sowie die Oberflächenbeschichtung der Gummischicht einschließlich der Sacklöcher mit Teflon, die Erzeugung eines Vakkums besonders für das Einpressen aber auch Entformens der Stifte, nicht erforderlich macht.
Die Stärke der Teflonschicht ist von der Lochtiefe, der Geometrie und der Anzahl der Löcher pro cm² abhängig. Sie bewegt sich etwa in der Größenordnung von vorzugsweise 3 µm bis etwa 5 µm. Mit fortschreitendem Produktionsprozeß wird das Teflon zunehmend in die Wandungen der Löcher gepreßt, wodurch der Effekt einer zunehmenden Verfestigung und Glättung zu verzeichnen ist. Auf solche Weise geht das Beschichtungsmaterial nicht verloren, beziehungsweise es nutzt sich nicht im Sinne eines hohen Verscheißes frühzeitig ab, bezogen auf die Standzeit und Einsatzdauer der Gummischicht der Formwalze. Es tritt ein Triboeffekt im positiven Sinne ein, indem sich das die Wandungen und den Boden der Löcher auskleidende Teflon durch den einpressenden Kunststoff in geringste Poren der Wände weiter eindrückt und derart eine sich zunehmen verfestigende aber zugleich sehr glatte Oberfläche mit geringen Widerstand und hoher Gleitfähigkeit für den eindringenden Kunststoff und seiner späteren Entformung schafft. Mit Verbesserung der Gleitpaarung eng verbunden ist eine hohe Laufgeschwindigkeit der Anlage nebst ausgezeichneter Qualität der Erzeugnisse selbst.

Das Entformen des Bandes mit den Stiften erfolgt durch eine im Produktionszyklus nachfolgend Abzugswalze, welche mit einer Plasmavorrichtung in Verbindung steht (nicht nach der Erfindung). Zwischen der Abzugswalze und der Plasmavorrichtung wird das Stiftband durchgeführt, wobei es berührungslos dem Plasmabogen ausgesetzt ist und die äußeren Enden des Kunststoffes angeschmolzen werden, wodurch die Köpfe der Verhakungselemente gebildet werden. Diese vorrichtungs- und verfahrensgemäße Ausgestaltung der Stiftköpfe mittels Plasmavorrichtung findet Anwendung bei hohen Bandlaufgeschwindigkeiten im Bereich von etwa 12 m/min. bis ca. 200 m/min. Im niedrigeren Geschwindigkeitsbereich von etwa 1 m/min. bis ca.20 m/min. wird die Kopfbildung rein mechanisch und herkömmlich durchgeführt, wobei im Spalt zwischen einer auf > 230° C beheizbaren und teflonbeschichteten Anpreßwalze sowie einer temperierten Abzugswalze das Stiftband durchgeführt wird und dabei die Stiftköpfe angedrückt werden. Abschließend erfolgt lediglich noch der Prozeß der Aufwicktung des fertigen Stiftbandes zum Transport beziehungsweise seiner Weiterverarbeitung.

Die Erfindung soll nachstehend an einem Ausführungsbeispiel näher erläutert werden. In den dazugehörigen Zeichnungen zeigen:

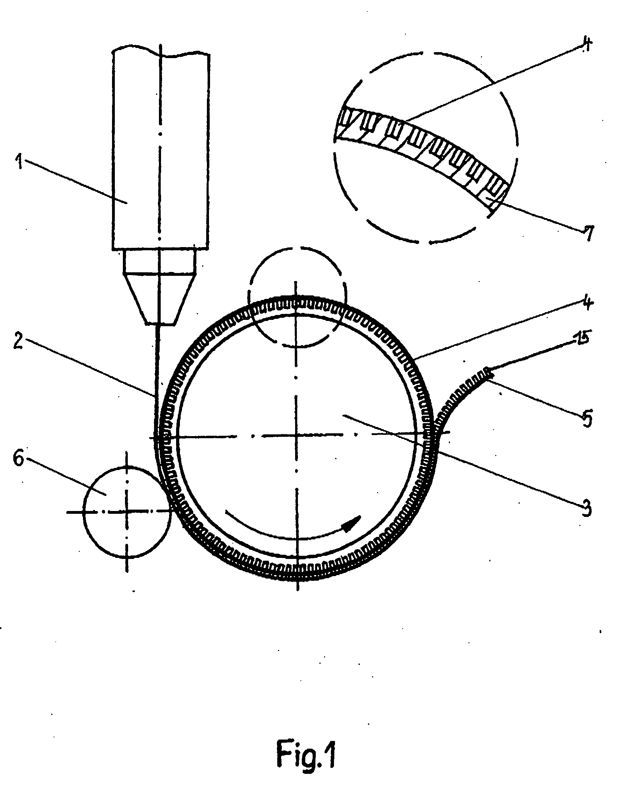

- Figur 1 :: das Produktionsschema des Stiftbandes

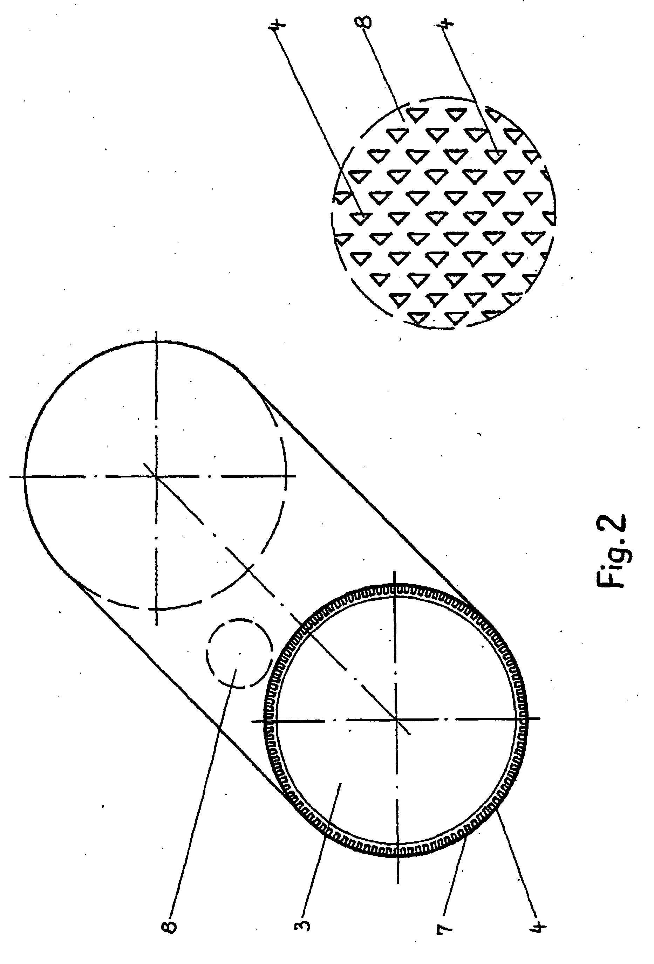

- Figur 2 :: das Schema der Formwalze

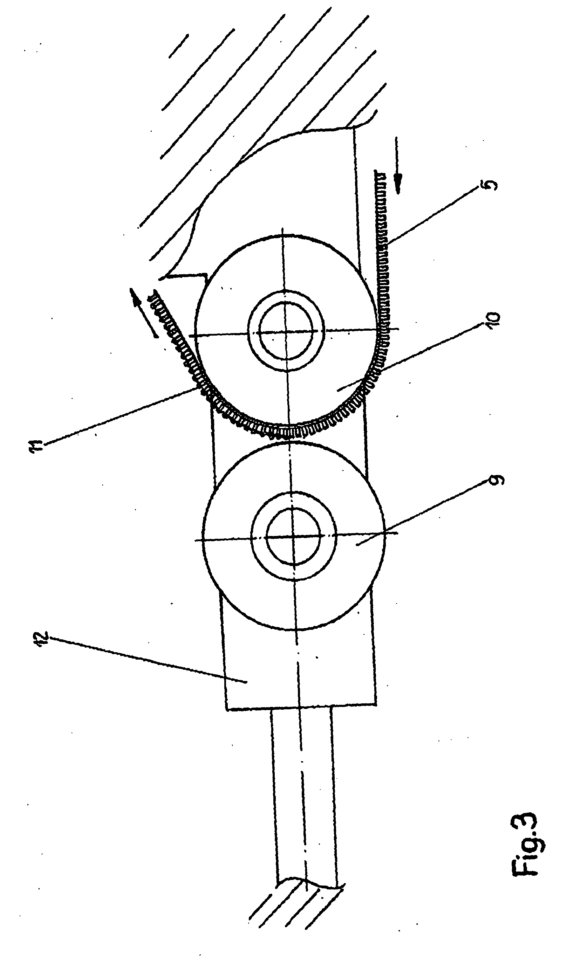

- Figur 3:: das Schema der Kopfbildung mit Walze

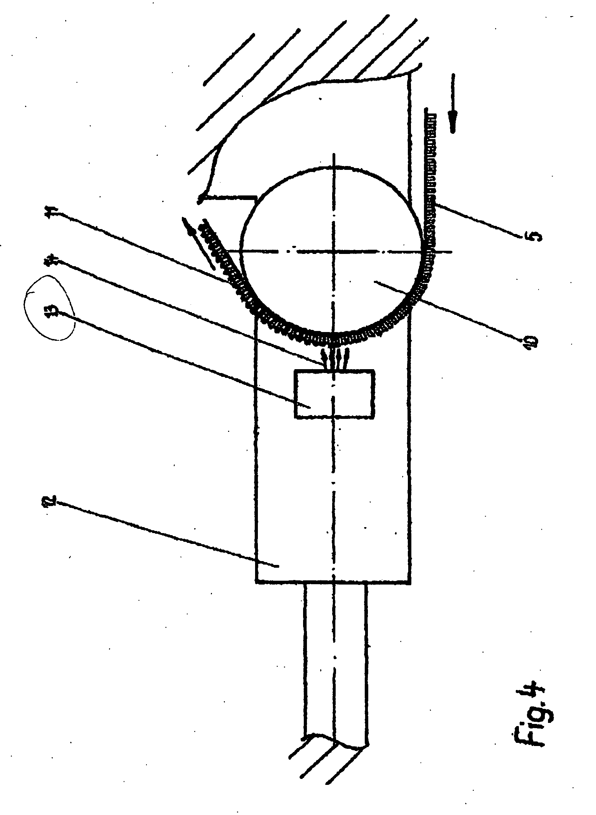

- Figur 4 :: das Schema Plasma - Kopfbildung
- Figur 5 :: die Formgebung Stiftlöcher

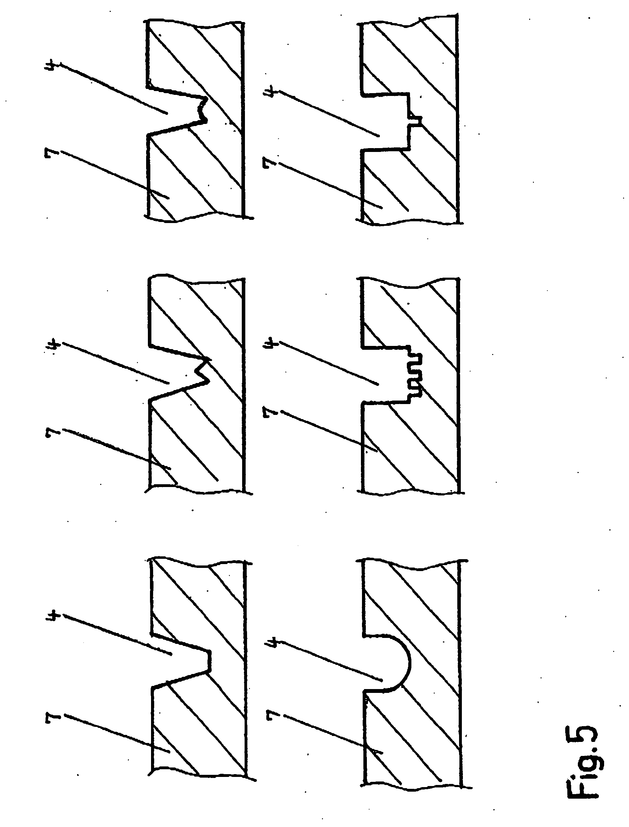

In einem Extruder wird auf herkömmliche Art und Weise Kunststoffgranulat aufgeschmolzen und über eine Breitschlitzdüse 1 als Folienband 2 einer temperierten Formwalze 3 zugeführt. Diese temperierte Formwalze 3 ist auf ihrem äußeren Umfang formschlüssig mit einer Gummischicht 7 ausgestattet. Zweckdienlich zur sicheren Aufnahme der Gummischicht 7 ist dazu die temperierte Formwalze 3 aufgerauht Die Gummischicht 7 ist als flächenartig ausgebildetes Band mit Stiflöchern 4 - aus dem Oberflächenausschnitt 8 der Formwalze 3 besonders ersichtlich - versehen, welche jedoch als Sackloch ausgebildet sind und somit nicht durchgängig die Gummischicht 7 durchbrechen. Die Gummischicht 7 besitzt auf ihrem Umfang verteilt gelaserte Öffnungen als den Stiftlöchern 4, welche nach unten, daß heißt dem Boden hin, leicht konisch verlaufen, Gemäß Figur 5 werden vielgestaltige Stirnflächen der Stiftlöcher 4 beispielhaft aufgezeigt, welche auf Grund der unbegrenzten dreidimensionalen Bearbeitungsmöglichkeiten der Gummischicht 7 bezüglich geometrischer Formen nicht nur in der Breite oder Schaftverjüngung, sondern auch ihrer Bodengestaltung so praktiziert werden. Durch die beliebige dreidimensionale Bearbeitungsmöglichkeit des Bodens der Stiftlöcher 4 ergeben sich mit geringem ökonomischem und Bearbeitungsaufwand beispielhaft die dargestellten Formen, welche in ihrer Negativform jeweils die Ausgestaltung des Stiftkopfes 11 ergeben. Die Gummischicht 7 ist zudem oberflächenbehandelt, indem sie mit einer Teflonschicht ausgekleidet ist, welche ebenfalls die Auskleidung der Stiftlöcher 4 mit einbezieht. Durch Ausübung von Druck auf das Folienband 2 mittels einer temperierten Druck- und Glättwalze 6, wird dieses gegen die temperierte Formwalze 3 gepresst, wodurch das Folienband 2 mit seinem Material in die Stiftlöcher 4 zugedrückt wird und die Stifte 15 auf dem Stiftband 5 entstehen. Nachfolgend wird das Stiftband 5 durch die temperierte Abzugswalze 10 von der temperierten Formwalze 3 abgezogen und über diese in Förderrichtung weiter transportiert. Gleichzeitig wird durch die auf > 230° C beheizte Anpreßwalze 9 der Stift 15 an seiner Oberfläche kurzzeitig thermisch derart aufgeheizt, daß eine Formung des Stiftkopfes 11 in Verbindung mit dem Anpreßdruck der beheizten Anpreßwalze 9 erfolgt Die Oberfläche der beheizten Anpreßwalze 9 ist zudem ebenfalls mit einer PTFE-Beschichtung ausgestattet. Technologisch wird mit der Anpreßwalze 9, im Geschwindigkeitsbereich des Stiftbandes 5 von etwa 1 m/min. bis etwa 20 m/min., gearbeitet. Alternativ (nicht nach der Erfindung) wird bei bestimmten Kunststoffmaterialien im höheren Geschwindigkeitsbereich des Stiftbandes 5 von etwa 12 m/min. bis ca. 200 m/min, gearbeitet und mit dem von einer Plasmavorrichtung 13 erzeugten Plasmabogen 14 die Stifte 15 an ihrer Oberseite schockartig erhitzt und dadurch angeschmolzen sowie gleichzeitig durch den "Druck" des Plasmabogens 14 derart an ihrer Oberfläche verformt, indem der Stiftkopf 11 ausgebildet wird. Sowohl die beheizte und PTFEbeschichtete Anpreßwalze 9, als auch die temperierte Abzugswalze 10 sind stabil an einem Maschinengestell 12 fixiert und angeordnet.

### Aufstellung der verwendeten Bezugszeichen

- 1 -: Breitschlitzdüse
- 2 -: Folienband
- 3 -: temperierte Formwalze
- 4 -: Stiftloch
- 5 -: Stiftband
- 6 -: temperierte Druck- und Glättwalze
- 7 -: Gummischicht
- 8 -: Ausschnitt Oberfläche Formwalze
- 9 -: beheizte PTFE-beschichtete Anpreßwalze
- 10 -: temperierte Abzugswalze
- 11 -: Stiftkopf
- 12 -: Maschinengestell
- 13 -: Plasmavorrichtung
- 14 -: Plasmabogen
- 15 -: Stift

## Patentansprüche

1. Verfahren zur Herstellung eines Haftverschlußteiles aus thermoplastischem Kunststoff, welcher als Folienband (2) von einem Extruder über eine Breitschlitzdüse (1) dem Spait zwischen einer Formwalze (8) und einer temperierten Druck- und Glättwalze (6) zugeführt wird **dadurch gekennzeichnet, daß** die Formwalze (3) mit einer Gummischicht (7) ausgestattet ist, weiche gelaserte Stiftlöcher (4) in Form von Sacklöchern aufweist, in die das noch nicht restlos ausgehärtete Folienband (2) durch die Druck- und Glättwalze (6) hineingedrückt wird, wodurch Stifte (15) ausgebildet werden, das Stiftband (5) mit seinen Stiften (15) nachfolgend von einer Abzugswalze (10) abgezogen wird sowie zwischen einer Anpreßwalze (9) und der Abzugswalze (10) die Stiftköpfe (11) angedrückt und ausgebildet werden.

2. Verfahren zur Hersteilung eines Haftverschlußteiles aus thermoplastischem Kunststoff nach Anspruch 1 **dadurch gekennzeichnet, daß** die Formwalze (3) temperiert ist und eine aufgerauhte Oberfläche zur Aufnahme der Gummischicht (7) besitzt.

3. Verfahren zur Herstellung eines Haftverschlußteiles aus thermoplastischem Kunststoff nach Ansprüchen 1 und 2 **dadurch gekennzeichnet, daß** die Stärke der auf der Formwalze (3) angeordneten Gummischicht (7) etwa 0,3 mm bis etwa 5 mm beträgt.

4. Verfahren zur Herstellung eines Haftverschlußteiles aus thermoplastischem Kunststoff nach Ansprüchen 1 bis 3 **dadurch gekennzeichnet, daß** die Formwalze (3) mit einem metallischen Grundkörper ausgestattet ist, worauf die Gummischicht (7) formschlüssig aufgebracht ist.

5. Verfahren zur Herstellung eines Haftverschlußteiles aus thermoplastischem Kunststoff nach Ansprüchen 1 bis 4 **dadurch gekennzeichnet, daß** die Gummischicht (7) der temperierten Formwalze (3) mit einer Teflonbeschichtung ausgestattet ist.

6. Verfahren zur Herstellung eines Haftverschlußteiles aus thermoplastischem Kunststoff nach Ansprüchen 1 bis 5 **dadurch gekennzeichnet, daß** die Anpreßwalze (9) mit > 230°C beheizt ist und ebenfalls oberflächenbehandelt mit einer Teflonbeschichtung ausgestattet ist.

7. Verfahren zur Herstellung eines Haftverschlußteiles aus thermoplastischem Kunststoff nach Ansprüchen 1 bis 5 **dadurch gekennzeichnet, daß** die Wandungen der Stiftlöcher cher (4) nicht senkrecht verlaufen, sondern ungleichförmig gelasert sind.

8. Verfahren zur Herstellung eines Haftverschlußteiles aus thermoplastischem Kunststoff nach Ansprüchen 1 bis 5 und 7 **dadurch gekennzeichnet, daß** die geometrischen Formen der Stiftlöcher (4) unterschiedlich ausgestaltet sind, jedoch vorzugsweise die Form eines Dreieckes aufweisen.

9. Verfahren zur Herstellung eines Haftverschlußteiles aus thermoplastischem Kunststoff nach Ansprüchen 1 und 7 bis 8 **dadurch gekennzeichnet, daß** die Länge der Stiftlöcher (4) frei wählbar ausgestaltet ist und sich so mit ihren Stiften (15) dem Verwendungszweck der Haftverschlußteile unterordnet.

## Claims

1. Method for producing a touch fastener part in a thermoplastic material, which is extruded in the shape of a film strip (2) from a sheet die (1) and is fed to the nip between a forming roller (8) and a thermally controlled smoothing and pressure roller (6), **characterized in that** the forming roller (3) is equipped with a rubber layer (7), which comprises laser formed pin holes (4) in the shape of blind holes, into which the film strip (2) in a not yet totally hardened state is being pressed by said smoothing and pressure roller (6), so that pins (15) are being formed, said pin strip (5) being then extracted by a draw off roller (10) and the heads(11) of the pins being pressed and formed between a pressure roller (9) and the draw off roller (10).

2. Method for producing a touch fastener part in a thermoplastic material as defined in claim 1, **characterized in that** said forming roller (3) is thermally controlled and comprises a roughened external surface for receiving said rubber layer (7).

3. Method for producing a touch fastener part in a thermoplastic material as defined in claims 1 and 2, **characterized in that** the thickness of the rubber layer which is disposed on the forming roller (3) is comprised between 0,3 mm and about 5 mm.

4. Method for producing a touch fastener part in a thermoplastic material as defined in claims 1 to 3, **characterized in that** said forming roller (3) comprises a metallic basic body and said rubber layer (7) is mounted with complementary shapes.

5. Method for producing a touch fastener part in a thermoplastic material as defined in claims 1 to 4, **characterized in that** said rubber layer (7) of said thermally controlled forming roller (3) is equipped with a Teflon covering.

6. Method for producing a touch fastener part in a thermoplastic material as defined in claims 1 to 5, **characterized in that** said pressure roller (9) is heated at a temperature higher than 230°C and is also equipped on its external surface with a Teflon covering.

7. Method for producing a touch fastener part in a thermoplastic material as defined in claims 1 to 5, **characterized in that** the walls of the pin holes (4) do not extend vertically, but are non uniformly laser formed.

8. Method for producing a touch fastener part in a thermoplastic material as defined in claims 1 to 5 and 7, **characterized in that** the geometrical shapes of the pin holes (4) are made differently, but however preferably with a triangular shape.

9. Method for producing a touch fastener part in a thermoplastic material as defined in claims 1 and 7 to 8, **characterized in that** the length of the pin holes (4) is freely selected so as to correspond with their pins (15) to the final use of the touch fastener part.

## Revendications

1. Procédé de production d'une fermeture autoagrippante en matière plastique thermoplastique que l'on envoie sous la forme d'un ruban (2) en film d'une extrudeuse, en passant par une buse (1) à fente large, dans l'intervalle compris entre un rouleau (8) de formage et un rouleau (6) d'application d'une pression et de lissage mis en température, **caractérisé en ce que** l'on équipe le rouleau (3) de formage d'une couche (7) en caoutchouc, qui a des trous (4) de tiges obtenus par laser sous la forme de trous borgnes, dans lesquels le ruban (2) en film, pas encore entièrement durci, est poussé par le rouleau (6) d'application d'une pression et de lissage, de sorte à former des tiges (15) le ruban (5) à tiges avec ses tiges (15) étant retiré ensuite par un rouleau (10) de retrait, et les têtes (11) des tiges étant formés par pressage entre un rouleau (9) de pressage et le rouleau (10) de retrait.

2. Procédé de production d'une fermeture autoagrippante en matière plastique thermoplastique suivant la revendication 1, **caractérisé en ce qu'**on met le rouleau (3) de formage en température et il a une surface rendue rugueuse pour la réception de la couche (7) de caoutchouc.

3. Procédé de production d'une fermeture autoagrippante en matière plastique thermoplastique suivant la revendication 1 ou 2, **caractérisé en ce que** l'épaisseur de la couche (7) de caoutchouc disposée sur le rouleau (3) de formage va d'environ 0,3 mm à environ 5 mm.

4. Procédé de production d'une fermeture autoagrippante en matière plastique thermoplastique suivant les revendications 1 à 3, **caractérisé en ce que** le rouleau (3) de formage est équipé d'un corps de base métallique, la couche (7) en caoutchouc y étant disposée à complémentarité de forme.

5. Procédé de production d'une fermeture autoagrippante en matière plastique thermoplastique suivant les revendications 1 à 4, **caractérisé en ce que** la couche (7) en caoutchouc du rouleau (3) de formage mis en température est équipée d'un revêtement en Téflon.

6. Procédé de production d'une fermeture autoagrippante en matière plastique thermoplastique suivant les revendications 1 à 5, **caractérisé en ce que** le rouleau (9) de pressage est chauffé à une température > à 230°C et est également traité en surface en étant équipé d'une couche de Téflon.

7. Procédé de production d'une fermeture autoagrippante en matière plastique thermoplastique suivant les revendications 1 à 5, **caractérisé en ce que** les parois des trous (4) à tiges ne sont pas perpendiculaires et sont formées d'une manière non uniforme par laser.

8. Procédé de production d'une fermeture autoagrippante en matière plastique thermoplastique suivant les revendications 1 à 5 et 7, **caractérisé en ce que** les formes géométriques des trous (4) à tiges sont différentes, mais ont de préférence la forme d'un triangle.

9. Procédé de production d'une fermeture autoagrippante en matière plastique thermoplastique suivant les revendications 1 et 7 à 8, **caractérisé en ce que** la longueur des trous (4) à tiges peut être choisie à volonté et régie ainsi par ses tiges (15) au but d'utilisation des fermetures autoagrippantes.
